# EUROPEAN PATENT SPECIFICATION

(11) **EP 1 662 606 B1**
(45) Date of publication and mention of the grant of the patent: **09.01.2013**
(21) Application number: 05025579.3
(22) Date of filing: 23.11.2005
(51) Int. Cl.: H01Q 1/24, H01Q 1/44, H01Q 9/04

(54) **Built-in antenna apparatus of portable wireless terminal**
Eingebaute Antenne für ein tragbares Funkgerät
Antenne intégrée pour appareil radio portable

(30) Priority: 24.11.2004 KR 2004096693
(43) Date of publication of application: 31.05.2006
(73) Proprietor: Samsung Electronics Co., Ltd., Suwon-si, Gyeonggi-do, 443-742 (KR)
(72) Inventor: Seol, Dong-Beom, Suwon-si, Gyeonggi-do (KR)
(74) Representative: Grünecker, Kinkeldey, Stockmair & Schwanhäusser

(56) References cited:
- EP-A- 0 339 628
- EP-A- 1 052 723
- WO-A-03/009417
- DE-A1- 19 824 145

## Description

The present invention relates to a battery pach and a portable wireless terminal having a built-in antenna module, and more particularly, to a built-in antenna apparatus for a portable wireless terminal, which is designed with a planar inverted-F antenna (PIFA) and contributes to a slim and lightweight profile of the wireless terminal.

Recently, as portable wireless terminals, such as cellular phones, wireless notebooks, and terminals for a Personal Communication System (PCS), Digital Cellular System (DCS), Global Positioning System (GPS) and Personal Digital Assistant (PDA),have become increasingly popular, terminals with various new functions and designs have been introduced. The terminals are developed with small-sized, slim, and lightweight features in mind and at the same time are focused on providing a variety of functions to satisfy popular demand. Therefore, the design objectives for the terminals are focused on volume reduction while maintaining or improving the functionality.

Today, rod antennas (also known as whip antennas) and helical antennas are widely used, owing to their good omnidirectional properties. However, the rod antenna and the helical antenna, which protrude outward from the terminal, are easy to break when dropped. These factors degrade the external appearance and limit the portability of the terminal. Therefore, an antenna installed within the terminal (called a built-in antenna, an internal antenna, or an intenna) has had widespread use in recent times. Various efforts are being made to improve the performance and productivity of the built-in antenna. There are two types of built-in antennas in common use: a planar inverted F antenna (PIFA) module having a feed point and a ground point; and a chip antenna module, suitable for mounting on a ceramic dielectric substance and having a copper coil whose turns are adjusted according to the operating frequency of the terminal.

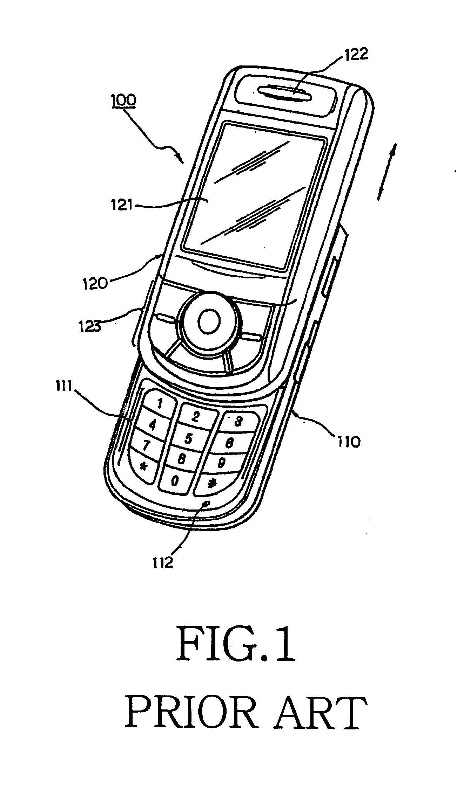

FIG. 1 is a perspective view of a prior art portable wireless terminal 100 and shows a slide type portable wireless terminal. Although the prior art exemplarily shows the slide type portable wireless terminal, it is not limited thereto but may be applied to a variety of terminals with a built-in antenna (e.g., a folder type terminal, a bar type terminal, a flip type terminal).

Referring to FIG. 1, the portable wireless terminal 100 includes a main body 110 and a slide body 120, which is slidable in a lengthwise direction of the wireless terminal 100 by a predetermined length. The slide body 120 is provided on a front side thereof with a display device 121. The display device 121 may be a color wide Liquid Crystal Display (LCD) module, preferably a touch screen panel. The display device 121 also includes a speakerphone device 122 installed at an upper side thereof, and at least one keypad assembly 123 installed at a lower side thereof. Preferably, the keypad assembly may include a navigation key button.

When the slide body 120 is opened on the main body 110, another keypad assembly 111 having a plurality of key buttons, preferably digital key buttons (in a 3x4 matrix), is exposed. In addition, another microphone device 112 is located at a lower side of the keypad assembly 111.

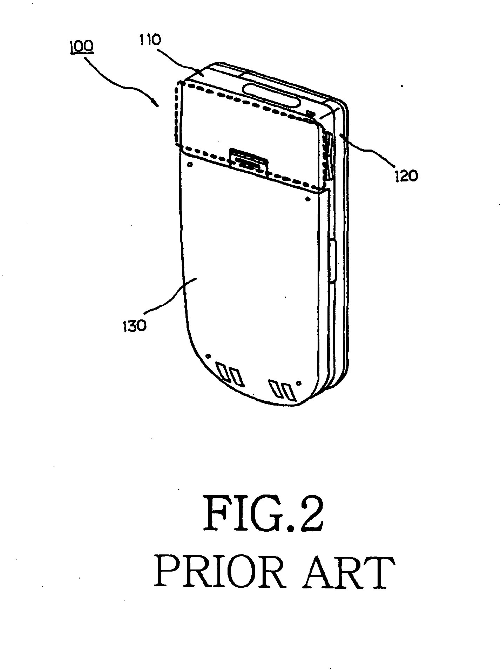

FIG. 2 is a rear perspective view of a prior art portable wireless terminal and shows the position of a radiator of a built-in antenna. Referring to FIG. 2, a battery pack serving as power supply means is installed on a rear surface 130 of the main body 110. In the conventional arrangement, the built-in antenna is installed inside the main body 110, as is indicated by a dotted line. In more detail, a plate type radiator is mounted at a predetermined height on a main board installed inside the main body 110. When the radiator is a PIFA type radiator having a dipole structure, it has a feed part and a ground part. The feed part is electrically connected to an RF connector of the main board and the ground part is electrically connected to a ground pattern formed on the main board. Accordingly, the radiator is fixed using an antenna carrier, or similar device, because the PIFA type radiator must be spaced apart from the main board a predetermined distance between the radiator and the main board.

However, when the antenna apparatus is installed inside the main body like in the prior art, the additional installation space of the antenna results in an increase in the volume of the terminal.

EP 0 339 628 A relates to a broadband antenna mounted within a detachable battery for a portable or handheld transceiver. The battery portion comprises six electro-chemical battery cells. The battery cells are enclosed in a part of a housing compartment which may be constructed of plastic or similar non-conductive material having low dielectric loss, which in turn may be partially covered with a conductive material on its inner surfaces. The remaining part of the battery housing may be dedicated to an antenna area located in the top part of the battery portion. The metallization of the inner surfaces of the battery housing surrounding the antenna portion is electrically circuited with the metallization of the housing enclosing the battery cells.

DE 198 24 145 A1 relates to an integrated antenna arrangement for mobile telecommunication terminals. The cells of a battery unit build a metallic plane which is used in the examples as a resonator of a planar antenna arrangement. In one example, a battery unit is incorporated in a recess of the device housing. In this example, a ground plane is put around the battery unit, wherein the distance between the battery unit and the ground plane is filled with a dielectric. The resonance frequency of the radiator can be adjusted through the selection of the dielectric constants of the cover of the battery case of the respective section of the main housing and of the dielectric. The metallic components of the battery unit are connected through a short circuiting rod with the ground plane.

EP 1 052 723 A relates to antenna constructions operating on a plurality of frequency bands. An antenna construction according to an example comprises a ground plane, a radiator, a short circuiting part that short circuits the radiator to the ground plane, and a feed line. In addition, there is a matching element at the free end of the radiator. In one example, a mobile communication device comprises a printed circuit board which has a ground plane and a separate conductive patch realized by means of electrically conductive patterns. The mobile communications device includes a battery module which, in this example, comprises a battery cell, a radiator and a matching element attached to the radiator. Antenna feed is realized through a connector from the mobile communications device to the battery module and further to the radiator. The ground plane of the antenna construction is located at the mobile communications device on its printed circuit board.

WO 03/009417 A relates to a battery antenna for a wireless communication terminal for minimizing the size of a portable wireless communication terminal, maintaining radiation efficiency and reducing electromagnetic waves toward human bodies. Examples are given where the battery is also used as an antenna. The size of the battery is determined according to the size and needs of the wireless communication terminal. It is stated that when the length of the antenna at operating frequency is less than needed, electrical compensation is required. In this case, capacitive reactance added between the ground plate and the antenna is presented so as to extend the length of the antenna. When the length of the antenna is longer than needed, an example is given where a capacitive reactance is added between the ground plate and the antenna, close to the button portion of the short plate and thereby obtaining effects of decreasing the electrical length of the antenna and performing double resonance at a desired frequency, and increasing the available frequency bandwidth.

It is the object of the present invention to provide a battery pach and a portable wireless terminal having a built-in antenna which is designed to deliver a maximum antenna performance without increasing the volume of the wireless terminal.

This object is solved by the subject matter of the independent claim.

Preferred embodiments are defined in the dependent claims.

The present invention also provides a built-in antenna apparatus of a portable wireless terminal, which is designed so as to not require a separate ground means.

Further, the present invention provides a built-in antenna apparatus of a portable wireless terminal which is designed to satisfy consumer demand by enhancing the performance of an antenna and at the same time decreasing the volume of the wireless terminal.

According to an aspect of the present invention, a portable wireless terminal is provided with a main body having a main board, and a battery pack detachably mounted in the main body and used as power supply means for the terminal. The battery pack includes an upper case frame; a lower case frame coupled with the upper case frame to provide a predetermined installation space therebetween; a battery cell having a conductive outer surface fixed on the installation space; and a radiator fixed to an inner surface of the upper case frame, and having a feed pin and a ground pin that are exposed on the lower case frame along a detour route around the battery cell.

According to the present invention, the radiator is installed not inside the main body but inside the case frame constituting the battery pack. Accordingly, a space for the installation of the radiator is removed from the main body, so that it becomes possible to remarkably reduce the volume of the wireless terminal.

Preferably, since the radiator is installed inside the case frame constituting the battery pack and a metallic outer surface of the battery cell is used as a ground surface, the built-in antenna apparatus does not need a separate ground means. However, it is permitted to use a ground pattern formed on a conventional main board.

According to the present invention, the radiator is designed to receive current and be grounded as soon as the battery pack is installed at the main body and power is supplied. Accordingly, the radiator may be designed to receive current or be grounded when the battery pack is installed in the terminal. A mechanical construction for the current feed or ground may be embodied by a variety of connector means well known, for example, a spring type connector or a pin spring type connector including a ball plunger.

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a perspective view of a conventional portable wireless terminal;

FIG. 2 is a rear perspective view of a conventional portable wireless terminal and shows the position of a radiator of a built-in antenna;

FIG. 3 is a rear perspective view of a portable wireless terminal according to the present invention and shows the position of a radiator of a built-in antenna;

FIG. 4 is a disassembled perspective view of a battery pack to which a built-in antenna according to the present invention is applied;

FIG. 5 is a rear perspective view of the battery pack shown in FIG. 4 as assembled;

FIG. 6 is a rear perspective view of a wireless terminal according to the present invention and shows an installation part to which a battery pack according to the present invention is applied; and

FIG. 7 is a schematic view illustrating a coupling of a radiator when a battery pack according to the present invention is applied to a wireless terminal.

Reference will now be made in detail to the preferred embodiments of the present invention, examples of which are illustrated in the accompanying drawings. Also, when it is determined that the subject of the invention may be ambiguous by a detailed description, the detailed description will be omitted.

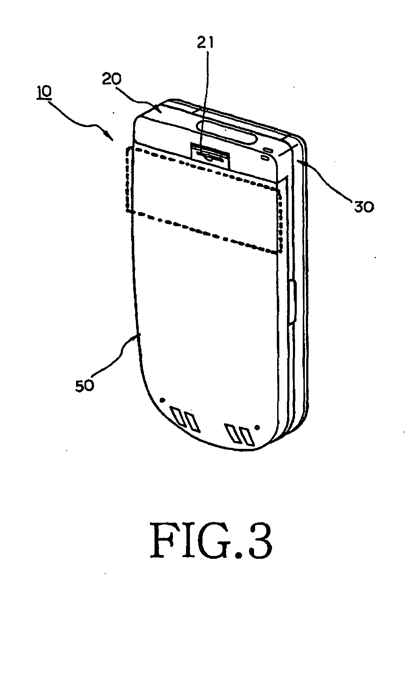

FIG. 3 is a rear perspective view of a portable wireless terminal including a main body and a slide body, slidable on the main body, and it shows the position of a radiator of a built-in antenna apparatus according to the present invention. In the description of the above portable wireless terminal, a variety of elements installed on a front side of the terminal will be omitted since they are the same as those of the aforementioned prior art terminal.

Referring to FIG. 3, a power supply means (e.g., a battery pack 50) is detachably installed on a rear surface of the terminal by a locker 21. The battery pack 50 has an increased volume, compared with that in the conventional terminal, so as to secure an installation space of a built-in antenna into a main body 40.

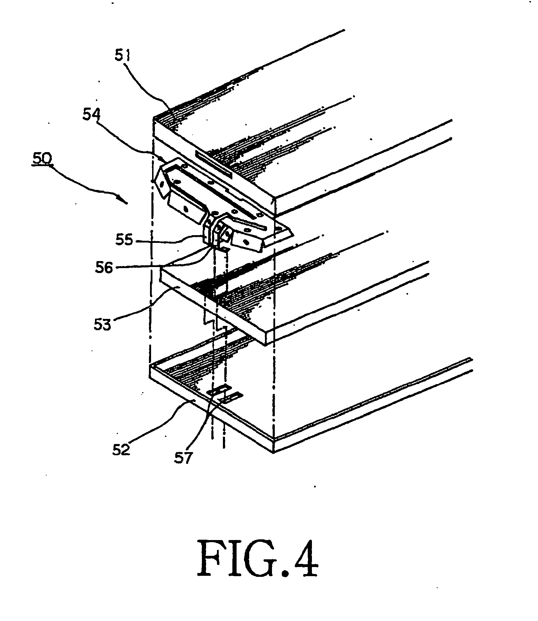

A radiator (see element 54 of FIG. 4) according to the present invention is installed inside the battery pack 50. In more detail, the radiator is installed inside upper and lower case frames (see elements 51 and 52 of FIG. 4) constituting the battery pack 50, and its position may correspond to a portion expressed as a dotted line in FIG. 3.

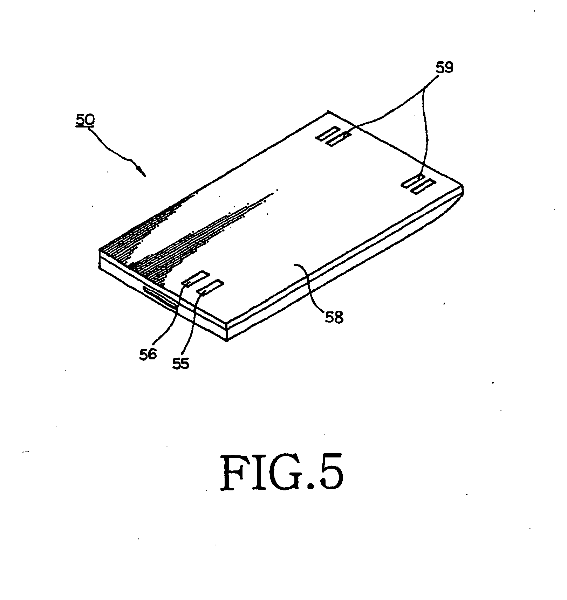

FIG. 4 is a disassembled perspective view of the battery pack to which a built-in antenna according to the present invention is applied, and FIG. 5 is a rear perspective view of the battery pack shown in FIG. 4 as assembled.

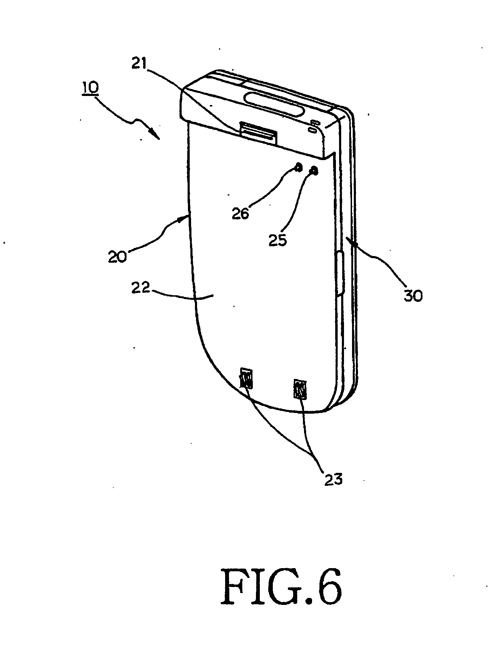

Referring to FIGs. 4 and 5, the battery pack includes an upper case frame 51, and a lower case frame 52 corresponding in shape to the upper case frame 51 and establishing a predetermined installation space therein when coupled with the upper case frame 51. A power supply means (e.g., a battery cell 53) is received in the installation space between the upper case frame 51 and the lower case frame 52. The battery cell 53 is the power supply means of the wireless terminal 10, and supplies power when a plurality of terminals, exposed on a lower surface of the battery pack 50, are electrically connected with a plurality of power supply terminals (see element 23 of FIG. 6), exposed on an installation surface of the battery pack 50 of a main body of the wireless terminal 10. The battery cell 53 is rechargeable using a predetermined charging unit.

Again, referring to FIG. 4, the radiator 54, for example, a PIFA type radiator, is installed on the upper case frame 51. To electrically connect the radiator 54, a feed pin 55 and a ground pin 56 each having a predetermined length extend from the radiator. The feed pin 55 and the ground pin 56 are formed via a detour route around the battery cell 53 to align with penetration holes 57 formed at the lower case frame 52. Accordingly, if the upper and lower case frames 51 and 52 are coupled with each other by a thermal fusion, supersonic fusion or other similar means, the ends of the feed pin 55 and the ground pin 56 of the radiator 54 would pass through the penetration holes 57 of the lower case frame 52. As shown in FIG. 5, the ends of the feed pin 55 and the ground pin 56 are exposed on the rear surface of the battery pack 50.

The feed pin 55 and the ground pin 56 are not limited to the above constructions and may be modified. For example, a metal ground piece may be installed at each of the penetration holes 57 and the feed pin 55 and the ground pin 56 are electrically connected with an upper surface of each of the metal ground pieces.

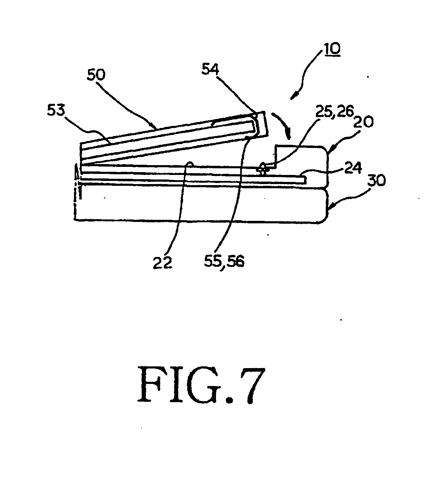

The present invention uses a metallic outer surface of the battery cell 53 as ground means of the PIFA type radiator 54. Since the battery cell 53 has an aluminum housing, it is possible to use the metallic outer surface of the battery cell 53 as the ground means by electrically connecting the ground pin 56 of the radiator 54 with the outer surface of the battery cell 53. However, the present invention is not limited to the above construction and may be modified to a construction in which the ground pin 56 of the radiator 54 is concurrently connected to a ground pattern formed on a main board (see element 24 of Fig. 7).

FIG. 6 is a rear perspective view of a wireless terminal according to the present invention. As shown in Fig. 6, power supply terminals 23, which are electrically connected with the terminals (see element 59 of Fig. 5) of the battery cell 53 of the battery pack 50, protrude from a lower portion of the rear surface of the main body 20. In addition, a protruding feed connector 25 and a ground connector 26 are mounted on an upper installation surface 22 of the main body 20 of the battery pack 50 such that the feed connector 25 and the ground connector 26 are electrically connected with the exposed feed pin 55 and ground pin 56 while the battery pack 50 is installed. The connectors 25 and 26 may be a spring connector having a ball plunger well known to those skilled in the art or may be embodied in a similar structure to the aforementioned power supply terminals. The present invention may employ various connecting means that can be connected to the exposed feed pin 55 and ground pin 56 of the battery pack 50.

FIG. 7 is a schematic view illustrating a coupling of a radiator when a battery pack according to the present invention is applied to a wireless terminal. As shown in Fig. 7, the feed connector 25 and the ground connector 26 are electrically connected with the main board 24 mounted on the main body 20. Although not shown in Fig. 7, the feed connector 26 is electrically connected with an RF connector of the main board 24, the ground connector 26 is electrically connected with a ground of the main board 24. In the above construction, the ground of the main board 24 is designed to be electrically grounded to the outer surface of the battery cell 53 of the wireless terminal. Accordingly, when the ground pin 56 of the radiator 54 is connected with the ground connector 26, the ground pin 56 is electrically connected with the metallic outer surface of the battery cell 53. This causes the outer surface of the metallic battery cell 53 to be used as a ground surface with respect to the radiator 54. Although not shown in Fig. 7, the ground pin 56 of the radiator 54 may be directly electrically connected with the battery cell 53.

In the present invention, the outer surface of the battery cell is made of metallic material, but may be made of non-metallic material if a plate-type metal is attached on the outer surface of the battery cell. When the outer surface of the battery cell is made of non-metallic material, it is preferable that the plate type metal is attached furthest from the radiator.

Since the built-in antenna apparatus according to the present invention has a radiator which is installed not inside the main body but inside the battery pack, it permits a removal of an antenna mounting space from the main body, thereby contributing to a slim profile and a lightweight feature of the wireless terminal.

## Claims

1. A battery pack (50) for supplying power to a portable wireless terminal (10), the battery pack being detachably mounted to the terminal, comprising:
an upper case frame (51);
a lower case frame (52) coupled with the upper case frame to provide a predetermined installation space therebetween;
a battery cell (53) having a conductive outer surface fixed in the installation space; and
a radiator (54) fixed to an inner surface of the upper case frame and disposed between said upper case frame and said battery cell, the radiator having a feed pin (55) and a ground pin (56) extending from the radiator, wherein the feed pin and the ground pin are formed via a detour route around the battery cell and the ends of the feed pin and the ground pin are exposed through penetration holes (57) on the lower case frame below a bottom surface of said battery cell.

2. A portable wireless terminal (10) provided with a main body (20) having a main board (24), and the battery pack (50) of claim 1 detachably mounted in the main body and used as power supply means for the wireless terminal.

3. The portable wireless terminal of claim 2, wherein the feed pin and the ground pin are respectively electrically connected to a feed means and a ground means, mounted on the main board of the main body when the battery pack is installed in the wireless terminal.

4. The portable wireless terminal of claim 3, wherein the main board comprises a feed connector and a ground connector protruding on a battery pack mounting surface, the feed connector being electrically connected with an RF connector of the main board and the ground connector being electrically connected with a ground of the main board such that the feed connector and the ground connector are respectively electrically connected with the feed pin and the ground pin.

5. The portable wireless terminal of claim 4, wherein the ground connector is electrically grounded to the conductive outer surface of the battery cell.

6. The portable wireless terminal of claim 5, wherein the ground pin of the radiator is electrically connected with the conductive outer surface of the battery cell.

7. The portable wireless terminal of claim 6, wherein the battery cell further comprises a plate-type conductive metal attached on the outer surface of the battery cell.

8. The portable wireless terminal of claim 7, wherein the conductive metal is attached on a surface which is farthest from the radiator.

9. The portable wireless terminal of claim 6, wherein the battery cell has an outer surface made of a metal material.

10. A built-in antenna of a portable wireless terminal (10) provided with a main body (20) having a main board (24), and the battery pack (50) of claim 1 detachably mounted in the main body and used as power supply means for the terminal.

11. The built-in antenna of claim 10, wherein the feed pin and the ground pin are respectively electrically connected to a feed means and a ground means, mounted on the main board of the main body when the battery pack is installed in the wireless terminal.

12. The built-in antenna of claim 11, wherein the main board comprises a feed connector and a ground connector protruding on a battery pack mounting surface, the feed connector being electrically connected with an RF connector of the main board and the ground connector being electrically connected with a ground of the main board such that the feed connector and the ground connector are respectively electrically connected with the feed pin and the ground pin.

13. The built-in antenna of claim 12, wherein the ground connector is electrically grounded to the conductive outer surface of the battery cell.

14. The built-in antenna of claim 13, wherein the ground pin of the radiator is electrically connected with the conductive outer surface of the battery cell.

## Patentansprüche

1. Akkupack (50) zum Zuführen von Strom zu einem tragbaren Drahtlos-Endgerät (10), wobei der Akkupack abnehmbar an dem Endgerät angebracht ist, und der Akkupack umfasst:
einen oberen Gehäuserahmen (51);
einen unteren Gehäuserahmen (52), der mit dem oberen Gehäuserahmen gekoppelt ist, um einen vorgegebenen Installationsraum zwischen ihnen zu schaffen;
eine Akkuzelle (53), die eine leitende Außenfläche hat und in dem Installationsraum fixiert ist; und
einen Strahler (54), der an einer Innenfläche des oberen Gehäuserahmens befestigt und zwischen dem oberen Gehäuserahmen und der Akkuzelle angeordnet ist, wobei der Strahler einen Speise-Stift (55) und einen Erd-Stift (56) aufweist, die sich von dem Strahler aus erstrecken, der Speise-Stift und der Erd-Stift über einen Umgehungsweg um die Akkuzelle herum ausgebildet sind und die Enden des Speise-Stiftes sowie des Erd-Stiftes über Durchgangslöcher (57) an dem unteren Gehäuserahmen unterhalb einer Bodenfläche der Akkuzelle freiliegen.

2. Tragbares Drahtlos-Endgerät (10), das mit einem Hauptkörper (20), der eine Hauptplatine (24) aufweist, und dem Akkupack (50) nach Anspruch 1 versehen ist, das in dem Hauptkörper lösbar angebracht ist und als eine Stromversorgungseinrichtung für das Drahtlos-Endgerät dient.

3. Tragbares Drahtlos-Endgerät nach Anspruch 2, wobei der Speise-Stift und der Erd-Stift elektrisch mit einer Speiseeinrichtung bzw. einer Erdungseinrichtung verbunden sind, die an der Hauptplatine des Hauptkörpers angebracht sind, wenn der Akkupack in dem Drahtlos-Endgerät installiert ist.

4. Tragbares Drahtlos-Endgerät nach Anspruch 3, wobei die Hauptplatine einen Speise-Verbinder und einen Erd-Verbinder umfasst, die an einer Akkupack-Anbringungsfläche vorstehen, der Speise-Verbinder elektrisch mit einem HF-Verbinder der Hauptplatine verbunden ist und der Erd-Verbinder elektrisch mit einer Erde der Hauptplatine verbunden ist, so dass der Speise-Verbinder und der Erd-Verbinder elektrisch mit dem Speise-Stift bzw. dem Erd-Stift verbunden sind.

5. Tragbares Drahtlos-Endgerät nach Anspruch 4, wobei der Erd-Verbinder elektrisch an der leitenden Außenfläche der Akkuzelle geerdet ist.

6. Tragbares Drahtlos-Endgerät nach Anspruch 5, wobei der Erd-Stift des Strahlers elektrisch mit der leitenden Außenfläche der Akkuzelle verbunden ist.

7. Tragbares Drahtlos-Endgerät nach Anspruch 6, wobei die Akkuzelle des Weiteren ein plattenartiges leitendes Metall umfasst, das an der Außenfläche der Akkuzelle angebracht ist.

8. Tragbares Drahtlos-Endgerät nach Anspruch 7, wobei das leitende Metall an einer Fläche angebracht ist, die am weitesten von dem Strahler entfernt ist.

9. Tragbares Drahtlos-Endgerät nach Anspruch 6, wobei die Akkuzelle eine Außenfläche hat, die aus einem Metallmaterial besteht.

10. Eingebaute Antenne eines tragbaren Drahtlos-Endgerätes (10), das mit einem Hauptkörper (20) mit einer Hauptplatine (24) und dem Akkupack (50) nach Anspruch 1 versehen ist, der abnehmbar in dem Hauptkörper angebracht und als Stromversorgungseinrichtung für das Endgerät dient.

11. Eingebaute Antenne nach Anspruch 10, wobei der Speise-Stift und der Erd-Stift elektrisch mit einer Speiseeinrichtung bzw. einer Erdungseinrichtung verbunden sind, die an der Hauptplatine des Hauptkörpers angebracht sind, wenn der Akkupack in dem Drahtlos-Endgerät installiert ist.

12. Eingebaute Antenne nach Anspruch 11, wobei die Hauptplatine einen Speise-Verbinder und einen Erd-Verbinder umfasst, die an einer Akkupack-Anbringungsfläche vorstehen, der Speise-Verbinder elektrisch mit einem HF-Verbinder der Hauptplatine verbunden ist und der Erd-Verbinder elektrisch mit einer Erde der Hauptplatine verbunden ist, so dass der Speise-Verbinder und der Erd-Verbinder elektrisch mit dem Speise-Stift bzw. dem Erd-Stift verbunden sind.

13. Eingebaute Antenne nach Anspruch 12, wobei der Erd-Verbinder elektrisch an der leitenden Außenfläche der Akkuzelle geerdet ist.

14. Eingebaute Antenne nach Anspruch 13, wobei der Erd-Stift des Strahlers elektrisch mit der leitenden Außenfläche der Akkuzelle verbunden ist.

## Revendications

1. Bloc de batterie (50) pour alimenter un terminal portable sans fil (10), le bloc de batterie étant monté de façon amovible sur le terminal, comprenant :
- un cadre supérieur de boîtier (51) ;
- un cadre inférieur de boîtier (52) couplé au cadre supérieur de boîtier pour ménager un espace prédéterminé d'installation entre ceux-ci ;
- un élément de batterie (53) comportant une surface extérieure conductrice fixée dans l'espace d'installation ; et
- un radiateur (54) fixé sur une surface intérieure du cadre supérieur de boîtier et disposé entre ledit cadre supérieur de boîtier et ledit élément de batterie, le radiateur comportant une broche d'alimentation (55) et une broche de masse (56) s'étendant depuis celui-ci, dans lequel la broche d'alimentation et la broche de masse sont formées via un trajet de détour autour de l'élément de batterie et les extrémités de la broche d'alimentation et de la broche de masse sont exposées à travers des trous de pénétration (57) sur le cadre inférieur de boîtier au-dessous d'une surface inférieure dudit élément de batterie.

2. Terminal portable sans fil (10) doté d'un corps principal (20) comportant une carte principale (24) et du bloc de batterie (50) selon la revendication 1, monté de façon amovible dans le corps principal et utilisé comme moyen d'alimentation du terminal sans fil.

3. Terminal portable sans fil selon la revendication 2, dans lequel la broche d'alimentation et la broche de masse sont respectivement connectées électriquement à des moyens d'alimentation et à des moyens de mise à la masse, montés sur la carte principale du corps principal lorsque le bloc de batterie est installé dans le terminal sans fil.

4. Terminal portable sans fil selon la revendication 3, dans lequel la carte principale comprend un connecteur d'alimentation et un connecteur de masse faisant saillies sur une surface de montage de bloc de batterie, le connecteur d'alimentation étant connecté électriquement à un connecteur RF de la carte principale et le connecteur de masse étant électriquement connecté à une masse de la carte principale, de sorte que le connecteur d'alimentation et le connecteur de masse soient respectivement connectés électriquement à la broche d'alimentation et à la broche de masse.

5. Terminal portable sans fil selon la revendication 4, dans lequel le connecteur de masse est électriquement mis à la masse de la surface extérieure conductrice de l'élément de batterie.

6. Terminal portable sans fil selon la revendication 5, dans lequel la broche de masse du radiateur est électriquement connectée à la surface extérieure conductrice de l'élément de batterie.

7. Terminal portable sans fil selon la revendication 6, dans lequel l'élément de batterie comprend en outre une pièce métallique conductrice de type plaque fixée sur la surface extérieure de l'élément de batterie.

8. Terminal portable sans fil selon la revendication 7, dans lequel la pièce métallique conductrice est fixée sur une surface la plus éloignée du radiateur.

9. Terminal portable sans fil selon la revendication 6, dans lequel l'élément de batterie a une surface extérieure faite en un matériau métallique.

10. Antenne incorporée d'un terminal portable sans fil (10) doté d'un corps principal (20) comportant une carte principale (24) et du bloc de batterie (50) selon la revendication 1, monté de façon amovible dans le corps principal et utilisé comme moyen d'alimentation du terminal.

11. Antenne incorporée selon la revendication 10, dans laquelle la broche d'alimentation et la broche de masse sont respectivement connectées électriquement à des moyens d'alimentation et à des moyens de mise à la masse, montés sur la carte principale du corps principal lorsque le bloc de batterie est installé dans le terminal sans fil.

12. Antenne incorporée selon la revendication 11, dans laquelle la carte principale comprend un connecteur d'alimentation et un connecteur de masse faisant saillies sur une surface de montage de bloc de batterie, le connecteur d'alimentation étant connecté électriquement à un connecteur RF de la carte principale et le connecteur de masse étant électriquement connecté à une masse de la carte principale, de sorte que le connecteur d'alimentation et le connecteur de masse soient respectivement connectés électriquement à la broche d'alimentation et à la broche de masse.

13. Antenne incorporée selon la revendication 12, dans laquelle le connecteur de masse est électriquement mis à la masse de la surface extérieure conductrice de l'élément de batterie.

14. Antenne incorporée selon la revendication 13, dans laquelle la broche de masse du radiateur est électriquement connectée à la surface extérieure conductrice de l'élément de batterie.
